# EUROPEAN PATENT APPLICATION

(11) **EP 3 809 684 A1**
(43) Date of publication of application: **21.04.2021**
(21) Application number: 18922357.1
(22) Date of filing: 13.06.2018
(51) Int. Cl.: H04N 5/225

(54) **PHOTOGRAPHING DEVICE**

(71) Applicant: VICTOR HASSELBLAD AB, 401 23 Göteborg (SE)
(72) Inventor: LI, Dong, Shenzhen, Guangdong 518057 (CN); SONG, Chuang, Shenzhen, Guangdong 518057 (CN)
(74) Representative: Appelt, Christian W.
(86) International application number: PCT/CN2018/091055
(87) International publication number: WO 2019/237278

(57) **Abstract**

The present disclosure provides an imaging device includes a housing, an antenna device, and a mounting part disposed protruding from the housing. The housing is a metal housing and the mounting part is a non-metal housing. The antenna device includes an antenna, and the antenna is disposed in the mounting part. With the imaging device provided in the present disclosure, when the antenna of the imaging device communicates with an external device, there is no need to consider where there is interference between the antenna and other components of the imaging device, and the size of the imaging device can be further reduced. At the same time, there is no signal shielding and other issues, and the signal transmission effect is better.

## Description

### TECHNICAL FIELD

The present disclosure relates to an imaging device.

### BACKGROUND

With the development of mobile electronic device technology, the diversification of the functions of the mobile electronic devices have attracted more and more attention. In conventional technology, common mobile electronic devices may include cameras and the like. In order to enable remote control of the mobile electronic device, an antenna can be disposed in the mobile electronic device. The antenna can realize the remote communication between the mobile electronic device and a computer and other devices, thereby realizing functions such as remote control and data transmission.

In conventional technology, the mobile electronic device includes a housing, and the antenna is disposed inside the housing. In order to ensure that the signal transmission of the antenna is not interfered, a certain distance between the antenna and other surrounding devices is needed. As a result, the space occupied by the antenna is relatively large, which is affecting the miniaturization and portability of the mobile electronic device.

### SUMMARY

In order to address the foregoing or other potential issues in the conventional technology, an embodiment of the present disclosure provides an imaging device.

Embodiments of the present disclosure provide an imaging device including a housing, an antenna device, and a mounting part disposed protruding from the housing. The housing is a metal housing and the mounting part is a non-metal housing. The antenna device includes an antenna, and the antenna is disposed in the mounting part.

The imaging device provided in the present disclosure includes a housing, a mounting part, and an antenna device in the imaging device. The housing is made of metal material, the mounting part is made of non-metal material, and the mounting part is disposed protruding from the housing. The antenna device includes an antenna, and the antenna is disposed in the mounting part. When the antenna of the imaging device communicates with an external device, there is no need to consider where there is interference between the antenna and other components of the imaging device, and the size of the imaging device can be further reduced. At the same time, there is no signal shielding and other issues, and the signal transmission effect is better.

Additional aspects and advantages of the technical solutions of the present disclosure will be partially provided in the following descriptions, and partially become obvious from the following descriptions. Alternatively, the additional aspects and advantages of the technical solutions can be understood from practicing the various embodiments of the present disclosure.

### BRIEF DESCRIPTION OF THE DRAWINGS

The specific embodiments of the present disclosure will be described in detail below with reference to the drawings. It should be understood that the specific embodiments described here are merely used to illustrate and explain the present disclosure, and the present disclosure is not limited to the following specific embodiments.
FIG. 1 is a first schematic diagram of the overall structure of an imaging device of the present disclosure.
FIG. 2 is a second schematic diagram of the overall structure of the imaging device of the present disclosure.
FIG. 3 is a schematic structural diagram of a mounting part in FIG. 1.
FIG. 4 is a front view of the mounting part in FIG. 1.
FIG. 5 is a schematic structural diagram of a first radiator of the present disclosure.
FIG. 6 is a schematic structural diagram of a first FPC unit of the present disclosure.
FIG. 7 is a schematic structural diagram of a second radiator of the present disclosure.
FIG. 8 is a schematic structural diagram of a second FPC unit of the present disclosure.
FIG. 9 is a schematic structural diagram of an antenna device of the present disclosure.

### REFERENCE NUMERALS

- 1: Housing
- 2: Mounting part
- 3: Antenna
- 4: First antenna
- 5: Second antenna
- 51: First antenna part
- 52: Second antenna part
- 6: First FPC unit
- 61: First radiator
- 611: First radiation ground
- 612: First radiation branch
- 613: Second radiation branch
- 62: First substrate
- 63: First protective film
- 64: First wire
- 65: Second wire
- 7: Second FPC unit
- 71: Second radiator
- 72: Second substrate
- 73: Second protective film
- 74: Opening
- 75: Third wire
- 8: Chip
- 81: First chip
- 82: Second chip
- 9: Conductive foam
- 11: Top surface
- 12: Bottom surface
- 13: Side surface

### DETAILED DESCRIPTION OF THE EMBODIMENTS

The specific embodiments of the present disclosure will be described in detail below with reference to the drawings. It should be understood that the specific embodiments described here are merely used to illustrate and explain the present disclosure, and the present disclosure is not limited to the following specific embodiments.

In the description of the present disclosure, it is to be understood that terms such as "central," "longitudinal", "lateral", "length," "width," "thickness," "upper," "lower," "front," "rear," "left," "right," "vertical," "horizontal," "top," "bottom," "inner," "outer," "clockwise," "counterclockwise," "axial," "radial," and "circumferential" should be construed to refer to the orientation or the position as then described or as shown in the drawings under discussion. These relative terms are only used to simplify description of the present disclosure, and do not indicate or imply that the device or element referred to must have a particular orientation, or constructed or operated in a particular orientation. Thus, these terms cannot be constructed to limit the present disclosure.

In addition, terms such as "first" and "second" are used herein for purposes of description and are not intended to indicate or imply relative importance or significance. Thus, features limited by "first" and "second" are intended to indicate or imply including one or more than one these features. Unless otherwise specified, in the description of the present disclosure, "a plurality of' relates to two or more than two, such as two or three.

In the present disclosure, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements or interactions of two elements, unless otherwise specified. The specific meaning of the above-mentioned terms in the present disclosure can be understood by those skilled in the art according to specific situations.

In the description of the present disclosure, reference terms such as "an embodiment," "some embodiments," "an example," "a specific example," or "some examples," means that a particular feature, structure, material, or characteristic described in connection with the embodiment or example is included in at least one embodiment or example of the present disclosure. Thus, the appearances of the above phrases throughout this specification are not necessarily referring to the same embodiment or example of the present disclosure. Furthermore, the particular features, structures, materials, or characteristics may be combined in any suitable manner in one or more embodiments or examples. In addition, when there is no conflict, those skilled in the art can combine different embodiments or examples and characteristics of different embodiments or examples described in the present disclosure.

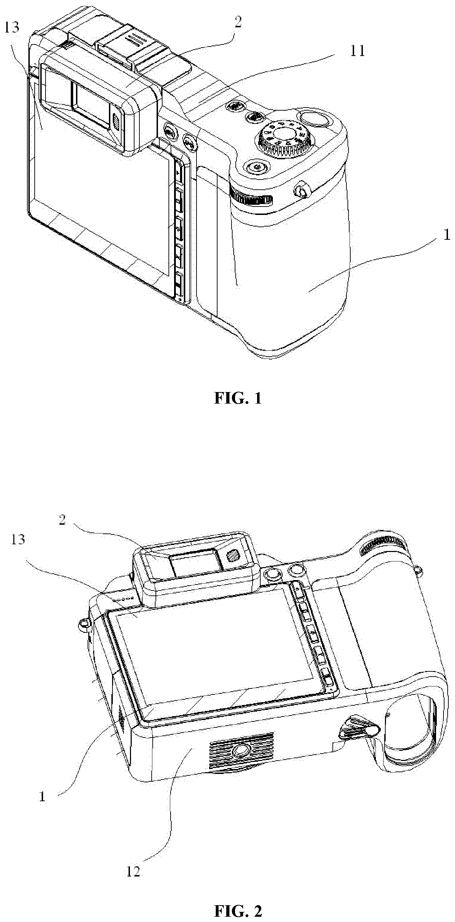

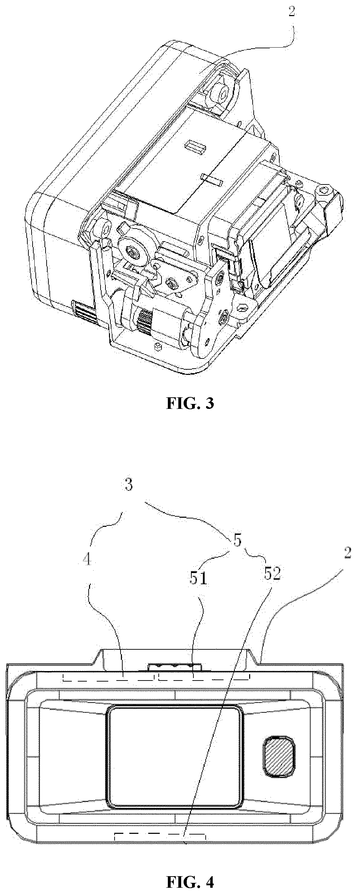

FIG. 1 is a first schematic diagram of the overall structure of an imaging device of the present disclosure; FIG. 2 is a second schematic diagram of the overall structure of the imaging device of the present disclosure; FIG. 3 is a schematic structural diagram of a mounting part in FIG. 1; and FIG. 4 is a front view of the mounting part in FIG. 1.

Referring to FIGs. 1-4, an embodiment of the present disclosure provides an imaging device. The imaging device includes a housing 1, an antenna device, and a mounting part 2 disposed protruding from the housing 1. The housing 1 may be a metal housing, and the mounting part 2 may be a non-metal mounting part. The antenna device may include an antenna 3, which can be disposed in the mounting part 2.

More specifically, the imaging device can be a mobile electronic device that can communicate with an external device. The imaging device may include the housing 1, the mounting part 2, and the antenna device. The mounting part 2 may be disposed protruding from the housing 1. The antenna device may be used to communicate with other external devices, such as mobile phones, computers, and commutation base stations.

The housing 1 may be a housing of an imaging device, and the main devices that can be used to realize its main functions, such as circuit boards, sensors, controllers, and storage devices, can be mounted or housed inside. The housing 1 may be made of metal material, thereby enhancing the structural strength of the imaging device. There are various shapes and sizes of the housing 1, which are not specifically limited here.

The mounting part 2 can be disposed protruding from the housing 1, and there can be various specific implementation methods. For example, a mounting hole may be disposed on the housing 1 matching the shape of the mounting part 2, and he mounting part 2 can be mounted at the mounting hole. In another example, a slot may be disposed on the housing 1, and the mounting part 2 may be locked in the slot. The material of the mounting part 2 may be a non-metal material, such as one or more of plastic, glass, etc.

In some embodiments, the housing 1 may include a top surface 11, a bottom surface 12, and a side surface 13 connected between the top surface 11 and the bottom surface 12, and the mounting part 2 may be disposed on the side surface 13. The top surface 11 may be a surface that faces away from the ground when the imaging device captures an image or a video. The bottom surface may be a surface of the imaging device facing the ground. The side surface 13 may be a surface that is disposed between the top surface 11 and the bottom surface 12 and faces the user when the imaging device is being used. The mounting part 2 may be disposed on the side surface 13. In addition, the mounting part 2 may be disposed on the side surface 13 close to the top surface 11, thereby facilitating the ease of use.

The antenna device may include the antenna 3, which can be used to achieve one or more functions such as obtaining the imaging position of the imaging device, performing image transmission or remote control, etc. The antenna 3 may be a conventional antenna, which is not specifically limited here. The antenna may be disposed in the mounting part 2. Since the mounting part 2 can protrude from the housing 1, there is no need to consider whether there may be interference between the antenna 3 and other components of the imaging device, and the volume of the imaging device can be further reduced.

In addition, since the mounting part 2 may be made of non-metal material, the antenna 3 may be disposed inside it. When the antenna 3 communicates with an external device, the signal sent or received needs to pass through the non-metallic mounting part 2 instead of the metallic housing 1. Therefore, the signal will not be shielded, and the signal transmission effect is better.

The imaging device provided in this embodiment includes a housing, a mounting part, and an antenna device. The housing may be made of metal material, the mounting part may be made of non-metal material, and the mounting part may be disposed protruding from the housing. The antenna device may include antenna, and the antenna may be disposed in the mounting part. When the antenna communicates with an external device, there is no need to consider whether there may be interference between the antenna and other components of the imaging device, and the volume of the imaging device can be further reduced. At the same time, the signal will not be shielded, and the signal transmission effect is better.

Further, as an implementation method of the antenna 3, the antenna 3 may include a first antenna 4 for obtaining geographic location information and a second antenna 5 for implementing remote control and image transmission. As such, the imaging device can realize remote imaging and other operations through the external device, obtain geographic location when the image is captured, transmit the image to the external device, thereby further increasing the operation convenience of the imaging device and the integrity of the image information.

There may be various types of the first antenna 4, which may be a conventional GNSS antenna for obtaining the geographic location information. For example, the first antenna 4 may include one or more of a GNSS antenna, a GPS antenna, a Galileo antenna, or a GLONASS antenna.

Further, the first antenna 4 may be disposed on top of the mounting part 2 facing away from the ground. Since the first antenna 4 can obtain geographic location information, it needs to communicate with satellite in the sky when it works. By disposing the first antenna 4 on the top away from the bottom surface, the first antenna 4 can be closer to the sky when in use, and the signal transmission effect is better.

There may also be various types of the second antenna 5, which may be a conventional antenna that can realize remote control and image transmission. For example, the second antenna 5 may include one or more of a Wi-Fi antenna, a Bluetooth antenna, a WLAN antenna, or a NFC antenna.

As an implementation method of the second antenna 5, the second antenna 5 may include a first antenna part 51 and a second antenna part 52. The first antenna part 51 may be disposed at the top of the mounting part 2 facing away from the ground, and the second antenna part 52 may be disposed at the bottom of the mounting part 2 facing the ground.

More specifically, the second antenna 5 may include two or more antennas. Taking two antennas as an example, one of the antennas may be the first antenna part 51, and the other antenna may be the second antenna part 52. There may also be various types of the first antenna part 51 and the second antenna part 52. For detail, reference may be made to the types of the second antenna 5. In addition, the first antenna part 51 and the second antenna part 52 may be the same type of antenna, or different types of antennas, which are not limited here. In some embodiments, the first antenna part 51 and the second antenna part 52 may be the same type of Wi-Fi antenna, and each Wi-Fi antenna may cover 2.4G and 5.8G frequency bands. The first antenna part 51 and the second antenna part 52 may realize dual transmission and dual reception, thereby forming a MIMO antenna and further improving system efficiency. When the first antenna part 51 and the second antenna part 52 send different codes of the same information, the anti-interference ability of the system can be greatly improved while the transmission bandwidth remain unchanged. When the first antenna part 51 and the second antenna part 52 send different codes of different information, the system transmission bandwidth can be greatly improved while the anti-interference ability remain unchanged. In addition, the antenna forms of the first antenna part 51 and the second antenna part 52 may also be IFA, MONOPOLE, LOOP, etc.

The first antenna part 51 may be disposed at the top of the mounting part 2 facing away from the bottom surface, and the second antenna part 52 may be disposed at the bottom of the mounting part 2 facing the ground. As such, the two antennas can be separated from each other, thereby improving the isolation and reducing the mutual influence between the two antennas. It should be understood that the first antenna part 51 may also be disposed at the bottom of the mounting part 2, and the second antenna part 52 may also be disposed at the top of the mounting part 2.

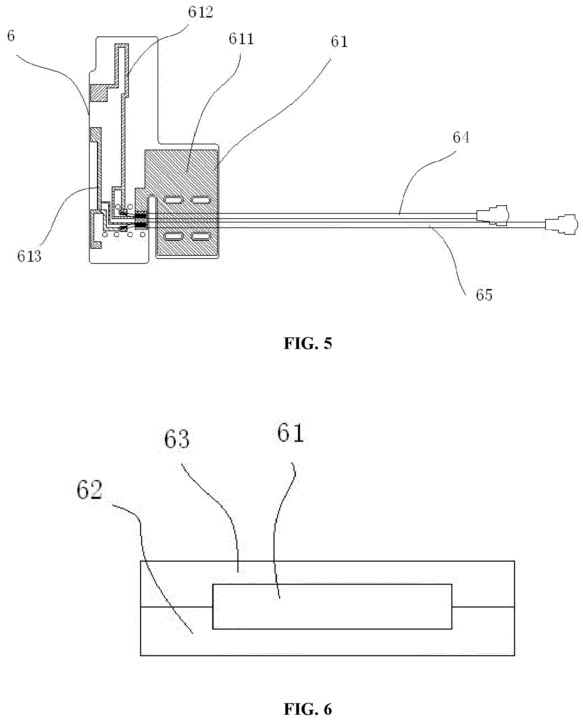

FIG. 5 is a schematic structural diagram of a first radiator of the present disclosure; and FIG. 6 is a schematic structural diagram of a first FPC unit of the present disclosure.

Referring to FIGs. 5-6, since the first antenna 4 and the first antenna part 51 can be both disposed on top of the mounting part 2, in order to further reduce the installation space, a first radiator 61 may be disposed on top of the mounting part 2. The first radiator 61 may be used to form the first antenna 4 and the first antenna part 51, such that the first antenna 4 and the first antenna part 51 can be formed in the same radiator, thereby reducing the number of radiators. The first radiator 61 may be a conventional object capable of emitting radiation, in some embodiments, it can be copper foil, which is small with high performance. The shape and size of the copper foil may be set based on the actual situation, which is not specifically limited here.

In some embodiments, the first radiator 61 may include a first radiation ground 611, and a first radiation branch 612 and a second radiation branch 613 respectively connected to the first radiation ground 611. The first radiation ground 611 and the first radiation branch 612 together can form the first antenna 4, and the first radiation ground 611 and the second radiation branch 613 together can form the first antenna part 51. As such, the first antenna 4 and the first antenna part 51 can be formed in a radiator in the forming of sharing the first radiation ground 611, thereby reducing the size of the antenna 3 and the mutual interference.

Furthermore, a first FPC unit 6 may be disposed on top of the mounting part 2, and both sides of the first radiator 61 may be respectively covered with a first substrate and a first protective film 63. The first substrate 62, the first protective film 63, and the first radiator 61 together can constitute the first FPC unit 6.

More specifically, in order to prevent the first radiator 61 from being damaged, it may be packaged in the first FPC unit 6. The first FPC unit 6 may be disposed on top of the mounting part 2, which may include the first radiator 61, the first substrate 62, and the first protective film 63. The first protective film 63 and the first substrate 62 may be respectively disposed on both sides of the first radiator 61, thereby sealing the first radiator 61 inside the first FPC unit 6. As such, the first radiator 61 can be prevented from being damaged, which can affect the performance of the first antenna 4 and the first antenna part 51.

As another implementation method of the second antenna part 52, the second antenna part 52 may also be electrically connected to the housing 1. Since the second antenna part 52 can be disposed at the bottom of the mounting part 2, it can be relatively close to other internal components of the imaging device. By electrically connecting the second antenna part 52 with the housing 1, the grounding of the second antenna part 52 can be achieved, which can improve its performance.

It should be understood that, for the first antenna 4 and the first antenna part 51, since they can be both disposed on top of the mounting part 2 and the mounting part 2 can be positioned close to the top surface, the surrounding components may be limited and the performance may be better, and there may be no need for grounding. Of course, in order to further improve performance, the first antenna 4 and the first antenna part 51 may also be grounded.

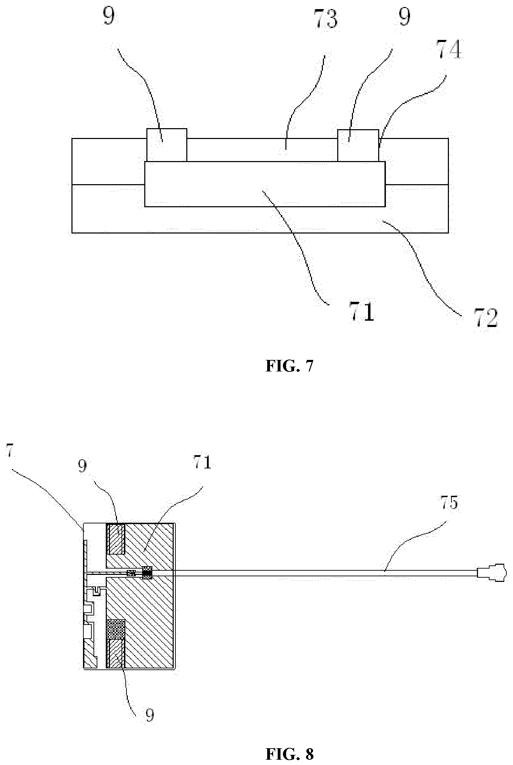

FIG. 7 is a schematic structural diagram of a second radiator of the present disclosure; and FIG. 8 is a schematic structural diagram of a second FPC unit of the present disclosure.

Referring to FIGs. 7-8. Further, a second radiator 71 may be disposed on the mounting part 2, and the second radiator 71 may be used to form the second antenna part 52. The second radiator 71 may be a conventional object capable of emitting radiation, in some embodiments, it can be copper foil, which is small with high performance. The shape and size of the copper foil may be set based on the actual situation, which is not specifically limited here.

Furthermore, in order to prevent the second radiator 71 from being damaged, a second FPC unit 7 may be disposed at the bottom of the mounting part 2. Both sides of the second radiator 71 may be respectively covered with a second substrate 72 and a second protective film 73. The second substrate 72, the second protective film 73, and the second radiator 71 together can constitute the second FPC unit 7. More specifically, the second radiator 71 may be packaged in the second FPC unit 7, and the second FPC unit 7 may be disposed at the bottom of the mounting part 2, which may include the second radiator 71, the second substrate 72, and the second protective film 73. The second protective film 73 and the second substrate 72 may be respectively positioned on both sides of the second radiator 71, thereby sealing the second radiator 71 inside the second FPC unit 7. As such, the second radiator 71 can be prevented from being damaged, which can affect the performance of the second antenna part 52.

In addition, the second radiator 71 and the housing 1 may be electrically connected in various ways. For example, a wire may be disposed between the second protective film 73 and the second substrate 72, and the wire may be used for electrical connection. In some embodiments, the second radiator 71 may contact the housing 1 through a conductive member. An opening 74 may be formed on the second protective film 73. The conductive member may pass through the opening 74, such that the conductive member may connect the housing 1 and the second radiator 71 through the opening. The shape and size of the opening 74 may be set based on the actual situation. The connection through the opening 74 can prevent the conductive member from being disposed between the second protective film 73 and the second substrate 72, which can affect the sealing performance of the second FPC unit 7.

In some embodiments, the part of the second radiator 71 corresponding to the opening 74 may be in contact with the housing 1 through conductive member, which can reduce the thickness of the second FPC unit 7 and improve the space utilization of the imaging device.

There may be many types of the conductive member, such as a wire or a conductive block, etc. In some embodiments, the conductive member may include a conductive foam 9. The conductive foam 9 can play the role of connection and buffering at the same time. While achieving electrical connection, it can also prevent the second FPC unit 7 from colliding with the housing 1 when the imaging device is impacted.

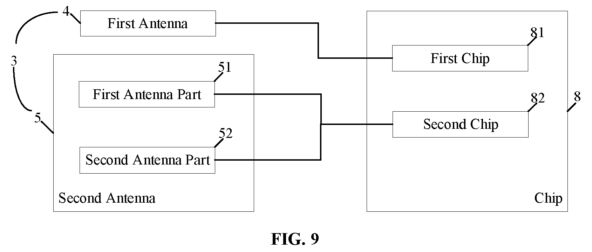

FIG. 9 is a schematic structural diagram of an antenna device of the present disclosure. Referring to FIG. 9. On the basis of the above embodiment, the antenna device further includes a chip 8 electrically connected to the antenna 3. The chip 8 can be integrated with the antenna 3, or it can be disposed separately from the antenna 3, which is not specifically limited here. In some embodiments, the chip 8 may be disposed in the housing 1. Since the size of the mounting part 2 is limited, the chip 8 may be disposed in the housing 1 to reduce the size of the mounting part 2.

In some embodiments, the chip 8 may include a first chip 81 and a second chip 82. The first antenna 4 may be electrically connected to the first chip 81, and the first antenna part 51 and the second antenna part 52 may be electrically connected to the second chip 82, respectively. For example, the first antenna 4 may be a GPS antenna, the first antenna part 51 and the second antenna part 52 may be Wi-Fi antenna, the first chip 81 may be a GPS chip, and the second chip 82 may be a Wi-Fi chip. As such, the control of the GPS antenna and the Wi-Fi antenna can be separated, which is convenient for the function partition management and realization.

Further, the first antenna 4 and the first chip 81 may be electrically connected by a first wire 64. There may be many types of the first wire 64. In some embodiments, the first wire 64 may be a coaxial wire to facilitate signal transmission.

In addition, the first antenna part 51 and the second antenna part 52 may be electrically connected by a second wire 65, and the second antenna part 52 and the second chip 82 may be electrically connected by a third wire 75. The wire is easy to bend, which can adapt to the complicated internal structure of the imaging device, which is more helpful to reduce the size of the imaging device. There may be various types of wires. In some embodiments, the second wire 65 may be a coaxial wire, and the third wire 75 may be a coaxial wire, which is convenience to facilitate signal transmission.

On the basis of the above-mentioned embodiment, the mounting part 2 may further include a housing and a base mounted in the housing. The first antenna 4 and the second antenna 5 may be fixed between the base and the housing.

More specifically, the mounting part 2 may include a base and a housing sleeved outside the base. The first antenna 4 and the second antenna 5 may be fixed between the base and the housing, thereby preventing the first antenna 4 and the second antenna 5 from being exposed to the mounting part 2 and being damaged, and improving the service life of the first antenna 4 and the second antenna 5.

In some embodiments, the first antenna 4 and the second antenna 5 may be fixed on the base, and a buffer may be disposed between the first antenna 4 and the housing, and between the second antenna 5 and the housing. The buffer may have a certain degree of elasticity, which can be filled in a gap between the first antenna 4 and the housing to enhance the fixing effect of the first antenna 4. At the same time, the buffer can reduce the impact of the first antenna 4 when the imaging device vibrate, thereby ensuring the normal operation of the first antenna 4.

Similarly, a buffer may also be disposed between the second antenna 5 and the housing. There may be various types of buffers, such as rubber, sponge, etc. In some embodiments, the buffer may include a foam, which has a lower cost.

It should be understood that in this embodiment, there may be various types of the imaging device, such as a tablet computer or a camera. When the imaging device is a tablet computer, the housing 1 may include a tablet computer housing, and the mounting part 2 may include a lens assembly, which can be used to capture images. The housing of the mounting part 2 may include a lens housing, the base may include a lens disposed in the lens housing, and the antenna 3 may be disposed between the lens housing and the lens. The lens housing may be made of non-metal materials, such as plastic, and the lens may be made of glass, such that the mounting part 2 can be made of non-metal materials. The antenna 3 may be disposed between the lens housing and the lens. More specifically, the antenna 3 may be fixed on the inner surface of the lens housing facing the lens, or on the outer surface of the lens facing the lens housing. Alternatively, one side of the antenna 3 may be fixedly connected to the lens housing, and the other side may be fixedly connected to the lens.

When the imaging device is a camera, the housing 1 may include a camera housing, and the mounting part 2 may include an eyepiece assembly for framing. The housing may include an eyepiece housing, the base may include an eyepiece disposed in the eyepiece housing, and the antenna 3 may be disposed between the eyepiece and the eyepiece housing. The eyepiece assembly can assist the user in framing, and it can include an eyepiece housing and an eyepiece. The eyepiece housing may be made of non-metal materials, such as plastic, and the eyepiece may be made of glass, such that the eyepiece assembly can be made of non-metal material. It should be understood that camera may also include a display screen, and both the display screen and the eyepiece assembly can be used for framing. When the camera is fixed on a trip or other places where the photographer is far away, the view can be viewed through the display screen, but when the photographer holds the camera, the view can be viewed through the eyepiece assembly, which is easy to operate. The antenna 3 may be disposed between the eyepiece and the eyepiece housing. More specifically, the antenna 3 may be fixed on the inner surface of the eyepiece housing facing the eyepiece, or on the outer surface of the eyepiece housing facing the eyepiece. Alternatively, one side of the antenna 3 may be fixedly connected to the eyepiece housing, and the other side may be fixedly connected to the eyepiece.

Finally, it should be noted that each of the above embodiments is only used for illustrating the technical solutions of embodiments of the present disclosure, rather than limiting them; although the embodiments of the present disclosure are illustrated in detail with reference to each of the aforementioned embodiments, those ordinary skilled in the art should understand: the technical solutions recorded in each of the aforementioned embodiments can still be amended, or part or all of the technical features can be substituted comparably; however, these modifications or substitutions do not make the essence of the corresponding technical solutions depart from the scope of the embodiment solutions of the present disclosure.

## Claims

1. An imaging device, comprising:
a housing;
an antenna device; and
a mounting part;
the housing being a metal housing for housing a circuit board, a sensor, and a controller, the mounting part being a non-metal mounting part, wherein
the antenna device includes an antenna, and the antenna is disposed in the mounting part.

2. The imaging device of claim 1, wherein:
the housing includes a top surface, a bottom surface, and a side surface connected between the top surface and the bottom surface, and the mounting part is disposed at a position where the side surface is close to the top surface.

3. The imaging device of claim 2, wherein:
the antenna includes a first antenna for obtaining geographic location information and a second antenna for implementing remote control and image transmission.

4. The imaging device of claim 3, wherein:
the first antenna is disposed on top of the mounting part away from the ground.

5. The imaging device of claim 3, wherein:
the second antenna includes a first antenna part and a second antenna part, the first antenna part being disposed on top of the mounting part away from the ground, and the second antenna part being disposed at the bottom of the mounting part facing the ground.

6. The imaging device of claim 5, further comprising:
a first radiator disposed on top of the mounting part, the first radiator being used to form the first antenna and the second antenna.

7. The imaging device of claim 6, wherein:
the first radiator includes a first radiation ground, and a first radiation branch and a second radiation branch respectively connected to the first radiation ground;
the first radiation ground and the first radiation branch jointly form the first antenna; and
the first radiation ground and the second radiation branch jointly form the first antenna part.

8. The imaging device of claim 7, further comprising:
a first FPC unit disposed on top of the mounting part;
a first substrate and a first protective film respectively covering both sides of the first radiator, the first substrate, the first protective film, and the first radiator jointly form the first FPC unit.

9. The imaging device of claim 8, wherein:
the second antenna part is also electrically connected to the housing.

10. The imaging device of claim 9, further comprising:
a second radiator disposed at the bottom of the mounting part, the second radiator being used to form the second antenna part.

11. The imaging device of claim 10, further comprising:
a second FPC unit disposed at the bottom of the mounting part;
a second substrate and a second protective film respectively covering both sides of the second radiator, the second substrate, the second protective film, and the second radiator jointly form the second FPC unit.

12. The imaging device of claim 11, wherein:
the second radiator is in contact with the housing through a conductive member, an opening is formed on the second protective film, and the conductive member passes through the opening.

13. The imaging device of claim 12, wherein:
a part of the second radiator corresponding to the opening is in contact with the housing through the conductive member.

14. The imaging device of claim 13, wherein:
the conductive member includes a conductive foam.

15. The imaging device of any one of claims 5-14, further comprising:
a chip electrically connected to the antenna.

16. The imaging device of claim 15, wherein:
the chip is disposed in the housing.

17. The imaging device of claim 16, wherein:
the chip includes a first chip and a second chip;
the first antenna is electrically connected to the first chip; and
the first antenna part and the second antenna part are respectively connected to the second chip.

18. The imaging device of claim 17, wherein:
the first antenna and the first chip are electrically connected through a first wire.

19. The imaging device of claim 18, wherein:
the first wire is a coaxial wire.

20. The imaging device of claim 17, wherein:
the first antenna part and the second chip are electrically connected through a second wire.

21. The imaging device of claim 20, wherein:
the second wire is a coaxial wire.

22. The imaging device of claim 17, wherein:
the second antenna part and the second chip are electrically connected through a third wire.

23. The imaging device of claim 22, wherein:
the third wire is a coaxial wire.

24. The imaging device of any one of claims 3-14, wherein:
the mounting part includes a housing and a base mounted in the housing, and the first antenna and the second antenna are fixed between the base and the housing.

25. The imaging device of claim 24, wherein:
the first antenna and the second antenna are fixed on the base, and a buffer is disposed between the first antenna and the housing, and between the second antenna and the housing.

26. The imaging device of claim 25, wherein:
the buffer includes a foam.

27. The imaging device of any one of claims 3-14, wherein:
the first antenna includes one or more of a GNSS antenna, a GPS antenna, a Galileo antenna, or a GLONASS antenna.

28. The imaging device of any one of claims 5-14, wherein:
the first antenna includes one or more of a Wi-Fi antenna, a Bluetooth antenna, a WLAN antenna, or an NFC antenna; and
the second antenna includes one or more of the Wi-Fi antenna, the Bluetooth antenna, the WLAN antenna, or the NFC antenna.

29. The imaging device of any one of claims 1-14, wherein:
the imaging device is a camera;
the housing includes a camera housing;
the mounting part includes an eyepiece assembly for framing;
the eyepiece assembly includes an eyepiece housing and an eyepiece disposed in the eyepiece housing; and
the antenna is disposed between the eyepiece and the eyepiece housing.

30. The imaging device of any one of claims 2-14, wherein:
the imaging device is a tablet computer;
the housing includes a tablet computer housing;
the mounting part includes a lens assembly;
the lens assembly includes a lens housing and a lens disposed in the lens housing; and
the antenna is disposed between the lens housing and the lens.
